# EUROPEAN PATENT SPECIFICATION

(11) **EP 2 530 212 B1**
(45) Date of publication and mention of the grant of the patent: **02.09.2020**
(21) Application number: 12169680.1
(22) Date of filing: 28.05.2012
(51) Int. Cl.: E04B 1/61, E04B 1/84, E04C 2/296, F16B 15/00, F16B 5/00

(54) **Method and apparatus for joining structural insulated panels**
Verfahren und Vorrichtung zum Verbinden von isolierten Konstruktionspaneelen
Procédé et appareil permettant d'assembler des panneaux isolés structurals

(30) Priority: 27.05.2011 GB 201109017
(43) Date of publication of application: 05.12.2012
(73) Proprietor: Keystone Lintels Limited, Cookstown Tyrone BT80 9DG (GB)
(72) Inventor: Coyle, Sean, Cookstown, Tyrone BT80 9DG (GB)
(74) Representative: Hanna, John Philip

(56) References cited:
- WO-A1-99/66143
- WO-A1-2004/003307
- WO-A2-01/31130
- CA-A- 1 143 531
- DE-A1- 3 024 717
- DE-A1- 10 016 691
- DE-U1- 20 021 654

## Description

The present invention relates to a method and arrangement for jointing building materials and in particular to a method and arrangement for jointing structural insulated panels.

Structural insulated panels (SIP's) have gained in popularity and market share over the previous five to ten years. These strong, lightweight, and highly efficient building panels are generally constructed from a thermal insulating core, formed from a material such as polyurethane foam, sandwiched between two orientated strand boards (OSB's), which are generally wood flakes or strands bonded together with resins, binders, and waxes. SIP panels have greater strength in terms of both axial loading and racking than conventional timber framing, are relatively simple to build with and provide extremely good thermal insulation.

SIP panels are generally joined using an insert in the form of a dowel or spline that is placed between two panels, within a routered out cavity in the foam insulation and examples are shown in Figures A namely an OSB thin spline, Figure B namely a mini SIP spline and Figure C namely dimensional lumbar spline. Fixings are then driven through the OSB's and into the inserts, forming a joint between two SIP panels. These inserts are typically either wooden or formed from small sections of SIP's. These joining methods are sufficient in terms of structure; however, the cost to create the cavities into which the inserts are placed can be expensive in terms of tooling and labour.

DE 100 16 691 A1 discloses a jointing arrangement for bridging the interface between two adjacent wooden sheets or frames. The jointing arrangement has an elongate wooden connecting member that is placed at the interface of the adjacent wooden sheets or frames and nails are then driven through the connecting member and into wooden sheets or frames to join the sheets or frames together.

CA 1 143 531 describes a wallboard ceiling with a concealed attachment means including a centrally suspended flexible gang nail plate and means for attachment to a wood joist or truss.

It is an object of the present invention to obviate or mitigate the problem of incurring additional expense due to tooling and labor costs associated with joining building material panels such as SIP panels.

Accordingly, the present invention provides a first panel and a second panel joined by a jointing arrangement between said first and second panels, the two panels having two mutually opposing end faces abutted together, the jointing arrangement comprising mechanical coupling means for externally bridging at least part of the interface between the two structural insulated panels on both opposing main planar surfaces of the panels, the mechanical coupling being possible without the use of an interior intermediate joining member, the mechanical coupling means comprising two or more flat plate members, characterized in that the panels are structural insulated panels, and wherein each flat plate member comprises spikes for spiking the the flat plate member onto the main planar surface of one of the panels, wherein one flat plate member is arranged bridging the interface on one side of the main planar surfaces of the first and second structural insulated panels, and another flat plate member is arranged bridging the interface on the opposing main planar surfaces of the first and second structural insulated panels.

Ideally, the first and second structural insulated panels have two mutually opposing end faces abutted together so the two adjacent structural insulated panels are in substantial alignment.

Ideally, the end faces of the first and second structural insulated panels extend between the two main planar surfaces of the panels.

Furthermore, the SIP panels can be joined without the need to create a recess in the end faces of the panels, thereby avoiding the additional costs of tooling and labor associated with this.

Preferably, the mechanical coupling means externally bridges the entire interface between the two panels, on both opposing main planar surfaces of the panels.

Ideally, the end faces of the SIP panels to be joined are in their original manufactured state with no adaptation for the purposes of the joint.

Preferably, the mechanical coupling means is a member capable of spanning across the interface between two SIP panels once the unaltered end faces are abutted together.

The mechanical coupling means is a flat plate member.

Preferably, the plate member has means for penetrating the SIP panels.

Ideally, the penetration means are spikes formed integral to the plate member.

Alternatively, the plate member has holes formed there through.

Advantageously, the holes allow fixing members to pass through the plate member and into the SIP panels.

Preferably, the fixing members clamp the plate member to the outer planar surface of the SIP panel.

Ideally, the fixing members are nails.

Preferably, multiple plate members are fixably attached across both interfaces.

Advantageously, the plurality of plate members provide sufficient structural integrity to the jointing arrangement.

Ideally, flat plate member is metallic.

Preferably, the plate member is steel.

Accordingly, the present invention provides a jointing arrangement between two adjacent structural insulated panels, the two adjacent structural insulated panels having two non recessed mutually opposing end faces abutted together by mechanical coupling means.

Accordingly, the present invention provides a device for jointing structural insulated panels comprising a means for mechanically coupling two non recessed mutually opposing end faces of two panels together along at least part of the interface between the two panels on both opposing main planar surfaces of the panels.

Accordingly, the present invention provides a device for jointing structural insulated panels comprising mechanical coupling means for externally bridging at least part of the interface between two panels on both opposing main planar surfaces of the panels.

Accordingly, the present invention provides a method for joining panels comprising the steps of abutting two panels together about their end faces and externally bridging at least part of the interface between the two panels on both opposing main planar surfaces of the panels using mechanical coupling means, the mechanical coupling being possible without the use of an interior intermediate joining member, the mechanical coupling means comprising two or more flat plate members, characterized in that the panels are structural insulated panels, and wherein each of the flat plate members comprises spikes, the method further comprising the step of spiking one of the flat plate members onto the main planar surface of one of the structural insulated panels on either or both sides of the interface and spiking another of the flat plate members onto the opposing main planar surface of one of the a structural insulated panels on either or both sides of the interface.

Alternatively, the method comprises the step of nailing a plate onto the main planar surface of a panel on either or both sides of the interface.

Advantageously, the plate member is trapped between the nail head and the planar surface.

Alternatively, the method comprises the step of screwing the plate onto a main planar surface of a panel on either or both sides of the interface.

Advantageously, the plate member is trapped between the screw head and the planar surface.

Alternatively, the method comprises the step of adhesively bonding the plate member to the main planar surface of a panel on either or both sides of the interface.

Preferably, the method comprises the step of sealing the interface joint.

Ideally, the method comprising the step of attaching a framing end member to an end face of the panel using flat plate in the same way as it is used to form a joint at the interface.

Ideally, the method comprising the steps of abutting two structural insulated panels together about their end faces and externally bridging at least part of the interface between the two structural insulated panels on both opposing main planar surfaces of the structural insulated panels using mechanical coupling means.

The invention will now be described with reference to the accompanying drawings which show by way of example only one embodiment of an apparatus in accordance with the invention.

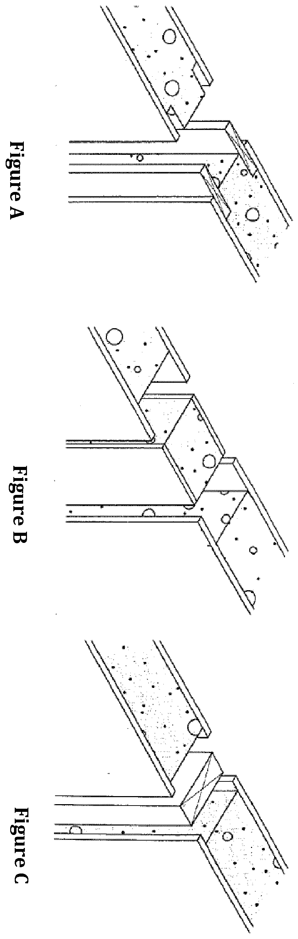

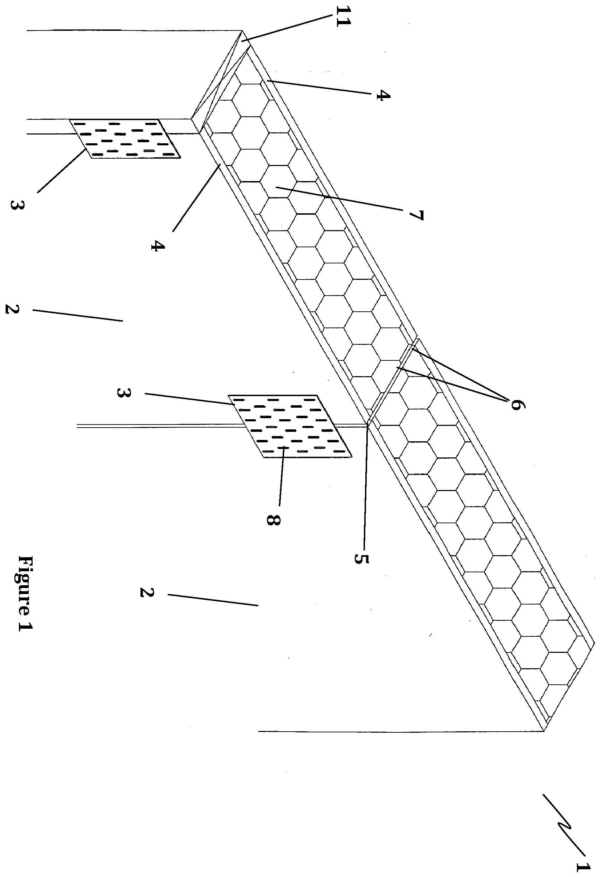

In the drawing, there is shown a jointing arrangement indicated generally by the reference numeral 1 between two structural insulated panels 2 having an opposing end face 6 of each structural insulated panel 2 abutted together defining an interface 5. An arrangement 3 for mechanically coupling the two structural insulated panels 2 together is provided by a member 3 for externally bridging the interface 5. The member 3 mechanically couples the main planar surfaces 4 of the abutted panels 2 together along at least part of the interface 5 between the two panels 2 on both opposing main planar surfaces 4 of the panels 2. The opposing abutted end faces 6 extend between the two main planar surfaces 4 of each panel 2. The plate member 3 is a flat plate member 3 for coupling the main planar surfaces 4 of the panels 2 together along at least part of the interface 5. The mechanical coupling is possible without the use of an interior intermediate joining member as required in the embodiments shown in Figures A to C of the prior art. The SIP panels 2 can be joined without the need to create a cavity/recess in the interior of the panels 2, thereby avoiding the additional labor and tooling costs associated with this. The main planar surfaces 4 can be externally coupled along the entirety of the interface 5 between the two panels 2, on both opposing main planar surfaces 4 of the panels 2. The end faces 6 of the SIP panels 5 to be joined are in their original manufactured state with no adaptation for the purposes of the jointing arrangement. The flat plate member 3 is a member capable of externally bridging the interface 5 between two SIP panels 2 once the unaltered end faces 6 are abutted together. The flat plate member 3 has integral spikes 8 for penetrating the SIP panels 2. The flat plate member 3 is formed from steel and the interface joint is sealed with a suitable sealant (not shown).

The method for joining the structural insulated panels 2 comprises abutting two panels 2 together about their end faces 6 between their two main planar surfaces 4 and externally bridging the interface with mechanical coupling members 3 which couple the main planar surfaces 4 of the panels 2 together along at least part of the interface 5 between the two panels 2 on both opposing main planar surfaces 4 of the panels 2. The flat plate 3 is spiked onto the main planar surfaces 4 of the panels 2. The joint 5 is further sealed using a suitable sealant (not shown). A framing end member 11 can be attached to an end face 6 of the panel 2 using flat plate 3 in the same way as it is used to form a joint at the interface 5.

In relation to the detailed description of the different embodiments of the invention, it will be understood that one or more technical features of one embodiment can be used in combination with one or more technical features of any other embodiment where the transferred use of the one or more technical features would be immediately apparent to a person of ordinary skill in the art to carry out a similar function in a similar way on the other embodiment.

In the preceding discussion of the invention, unless stated to the contrary, the disclosure of alternative values for the upper or lower limit of the permitted range of a parameter, coupled with an indication that one of the said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The features disclosed in the foregoing description or the following drawings, expressed in their specific forms or in terms of a means for performing a disclosed function, or a method or a process of attaining the disclosed result, as appropriate, may separately, or in any combination of such features be utilised for realising the invention in diverse forms thereof as defined in the appended claims.

## Claims

1. A method for joining panels (2) comprising the steps of abutting two panels (2) together about their end faces (6) and externally bridging at least part of the interface (5) between the two panels (2) on both opposing main planar surfaces (4) of the panels (2) using mechanical coupling means (3), the mechanical coupling being possible without the use of an interior intermediate joining member, the mechanical coupling means comprising two or more flat plate members (3), **characterized in that** the panels (2) are structural insulated panels (2), and wherein each of the flat plate members (3) comprises spikes, the method further comprising the step of spiking one of the flat plate members (3) onto the main planar surface (4) of one of the structural insulated panels (2) on either or both sides of the interface (5) and spiking another of the flat plate members (3) onto the opposing main planar surface (4) of one of the structural insulated panels (2) on either or both sides of the interface (5).

2. A method as claimed in claim 1, wherein the method comprises the step of nailing one of the plates (3) onto the main planar surface (4) of one of the structural insulated panels (2) on either or both sides of the interface (5).

3. A method as claimed in claims 1 or 2, wherein the method comprises the step of attaching a framing end member (11) to an end face (6) of one of the structural insulated panels (2) using another flat plate member (3).

4. A first panel (2) and a second panel (2) joined by a jointing arrangement (1) between said first and second panels (2), the two panels (2) having two mutually opposing end faces (6) abutted together, the jointing arrangement (1) comprising mechanical coupling means (3) for externally bridging at least part of the interface (5) between the two panels (2) on both opposing main planar surfaces (4) of the panels (2), the mechanical coupling being possible without the use of an interior intermediate joining member, the mechanical coupling means (3) comprising two or more flat plate members (3), **characterized in that** the panels (2) are structural insulated panels (2), and wherein each flat plate member (3) comprises spikes for spiking the flat plate member (3) onto the main planar surface (4) of one of the panels (2) wherein one flat plate member (3) is arranged bridging the interface (5) on one side of the main planar surfaces (4) of the first and second structural insulated panels (2), and another flat plate member (3) is arranged bridging the interface (5) on the opposing main planar surfaces (4) of the first and second structural insulated panels (2).

5. A first structural insulated panel (2) and a second structural insulated panel (2) as claimed in claim 4, wherein the first and second structural insulated panels (2) have two mutually opposing end faces (6) abutted together so the two adjacent structural insulated panels (2) are in substantial alignment.

6. A first structural insulated panel (2) and a second structural insulated panel (2) as claimed claims 4 or 5, wherein the end faces (6) of the first and second structural insulated panel (2) extend between the opposing main planar surfaces (4) of each structural insulated panel (2).

7. A first structural insulated panel (2) and a second structural insulated panel (2) as claimed in any one of claims 4 to 6, wherein the mechanical coupling means (3) externally bridges the entire interface (5) between the first and second structural insulated panels (2), on both opposing main planar surfaces (4) of the structural insulated panels (2).

8. A first structural insulated panel (2) and a second structural insulated panel (2) as claimed in any one of claims 4 to 7, wherein the end faces (6) of the structural insulated panels (2) are in their original manufactured state with no adaptation for the purposes of the joint.

9. A first structural insulated panel (2) and a second structural insulated panel (2) as claimed in any one of claims 4 to 8, wherein the mechanical coupling means (3) is a plate member (3) spanning across the interface (5) between the first and second structural insulated panels (2).

## Patentansprüche

1. Verfahren zum Verbinden von Paneelen (2), umfassend die Schritte des Aneinanderanlegens zweier Paneele (2) an ihren Endflächen (6) und das von außen erfolgende Überbrücken wenigstens eines Teils der Berührungsfläche (5) zwischen den zwei Paneelen (2) auf beiden sich gegenüberliegenden planaren Hauptflächen (4) der Paneele (2) mit Hilfe eines mechanischen Kopplungsmittels (3), wobei das mechanische Koppeln ohne die Verwendung eines innen- und zwischenliegenden Verbindungselements möglich ist, wobei das mechanische Kopplungsmittel zwei oder mehrere flache Plattenelemente (3) umfasst, **dadurch gekennzeichnet, dass** es sich bei den Paneelen (2) um SIP-Paneele (Structural Insulated Panels) (2) handelt, und wobei jedes der flachen Plattenelemente (3) Dorne umfasst, wobei das Verfahren ferner den Schritt des Befestigens eines der flachen Plattenelemente (3) auf der planaren Hauptfläche (4) eines der SIP-Paneele (2) auf einer oder beiden Seiten der Berührungsfläche (5) mittels der Dorne und des Befestigens eines weiteren der flachen Plattenelemente (3) auf der gegenüberliegenden planaren Hauptfläche (4) eines der SIP-Paneele (2) auf einer oder beiden Seiten der Berührungsfläche (5) mittels der Dorne umfasst.

2. Verfahren nach Anspruch 1, wobei das Verfahren den Schritt des Annagelns einer der Platten (3) auf die planare Hauptfläche (4) eines der SIP-Paneele (2) auf einer oder beiden Seiten der Berührungsfläche (5) umfasst.

3. Verfahren nach Anspruch 1 oder 2, wobei das Verfahren den Schritt des Anbringens eines Rahmenendelements (11) an einer Endfläche (6) eines der SIP-Paneele (2) mit Hilfe eines weiteren flachen Plattenelements (3) umfasst.

4. Ein erstes Paneel (2) und ein zweites Paneel (2), die durch eine Verbindungsanordnung (1) zwischen dem ersten und dem zweiten Paneel (2) verbunden sind, wobei die zwei Paneele (2) zwei sich gegenüberliegende Endflächen (6), die aneinander angelegt worden sind, aufweisen, wobei die Verbindungsanordnung (1) ein mechanisches Kopplungsmittel (3) umfasst, um wenigstens einen Teil der Berührungsfläche (5) zwischen den zwei Paneelen (2) auf beiden sich gegenüberliegenden planaren Hauptflächen (4) der Paneele (2) von außen zu überbrücken, wobei das mechanische Koppeln ohne die Verwendung eines innen- und zwischenliegenden Verbindungselements möglich ist, wobei das mechanische Kopplungsmittel (3) zwei oder mehrere flache Plattenelemente (3) umfasst, **dadurch gekennzeichnet, dass** es sich bei den Paneelen (2) um SIP-Paneele (Structural Insulated Panels) (2) handelt, und wobei jedes flache Plattenelement (3) Dorne umfasst, um das flache Plattenelement (3) auf der planaren Hauptfläche (4) eines der Paneele (2) mittels der Dorne zu befestigen, wobei ein flaches Plattenelement (3) so angeordnet ist, dass es die Berührungsfläche (5) auf einer Seite der planaren Hauptflächen (4) des ersten und des zweiten SIP-Paneels (2) überbrückt, und ein weiteres flaches Plattenelement (3) so angeordnet ist, dass es die Berührungsfläche (5) auf den gegenüberliegenden planaren Hauptflächen (4) des ersten und des zweiten SIP-Paneels (2) überbrückt.

5. Erstes SIP-Paneel (2) und zweites SIP-Paneel (2) nach Anspruch 4, wobei das erste und das zweite SIP-Paneel (2) zwei sich gegenüberliegende Endflächen (6), die aneinander angelegt worden sind, aufweisen, so dass die zwei benachbarten SIP-Paneele (2) im Wesentlichen in einer Linie ausgerichtet sind.

6. Erstes SIP-Paneel (2) und zweites SIP-Paneel (2) nach Anspruch 4 oder 5, wobei sich die Endflächen (6) des ersten und des zweiten SIP-Paneels (2) zwischen den sich gegenüberliegenden planaren Hauptflächen (4) jedes SIP-Paneels (2) erstrecken.

7. Erstes SIP-Paneel (2) und zweites SIP-Paneel (2) nach einem der Ansprüche 4 bis 6, wobei das mechanische Kopplungsmittel (3) die gesamte Berührungsfläche (5) zwischen dem ersten und dem zweiten SIP-Paneel (2) auf beiden sich gegenüberliegenden planaren Hauptflächen (4) der SIP-Paneele (2) von außen überbrückt.

8. Erstes SIP-Paneel (2) und zweites SIP-Paneel (2) nach einem der Ansprüche 4 bis 7, wobei sich die Endflächen (6) der SIP-Paneele (2) in ihrem ursprünglichen Herstellungszustand ohne Anpassung für die Zwecke der Verbindung befinden.

9. Erstes SIP-Paneel (2) und zweites SIP-Paneel (2) nach einem der Ansprüche 4 bis 8, wobei das mechanische Kopplungsmittel (3) ein Plattenelement (3) ist, das die Berührungsfläche (5) zwischen dem ersten und dem zweiten SIP-Paneel (2) überspannt.

## Revendications

1. Procédé pour assembler des panneaux (2) comprenant les étapes d'accolement de deux panneaux (2) ensemble au niveau de leurs faces d'extrémité (6) et de pontage externe d'au moins une partie de l'interface (5) entre les deux panneaux (2) sur les deux surfaces planes principales opposées (4) des panneaux (2) en utilisant un moyen d'accouplement mécanique (3), l'accouplement mécanique étant possible sans l'utilisation d'un élément d'assemblage intermédiaire intérieur, le moyen d'accouplement mécanique comprenant deux ou davantage d'éléments en plaque plate (3), **caractérisé en ce que** les panneaux (2) sont des panneaux structuraux isolés (2), et dans lequel chacun des éléments en plaque plate (3) comprend des broches, le procédé comprenant en outre l'étape d'embrochage d'un des éléments en plaque plate (3) sur la surface plane principale (4) d'un des panneaux structuraux isolés (2) sur l'un ou les deux côtés de l'interface (5) et l'embrochage d'un autre des éléments en plaque plate (3) sur la surface plane principale opposée (4) d'un des panneaux structuraux isolés (2) sur l'un ou les deux côtés de l'interface (5) .

2. Procédé selon la revendication 1, dans lequel le procédé comprend l'étape de clouage d'une des plaques (3) sur la surface plane principale (4) d'un des panneaux structuraux isolés (2) sur l'un ou les deux côtés de l'interface (5).

3. Procédé selon les revendications 1 ou 2, dans lequel le procédé comprend l'étape de fixation d'un élément d'extrémité d'encadrement (11) à une face d'extrémité (6) d'un des panneaux structuraux isolés (2) en utilisant un autre élément en plaque plate (3).

4. Premier panneau (2) et deuxième panneau (2) assemblés par un agencement d'assemblage (1) entre lesdits premier et deuxième panneaux (2), les deux panneaux (2) ayant des faces d'extrémité mutuellement opposées (6) accolées ensemble, l'agencement d'assemblage (1) comprenant un moyen d'accouplement mécanique (3) pour le pontage externe d'au moins une partie de l'interface (5) entre les deux panneaux (2) sur les deux surfaces planes principales opposées (4) des panneaux (2), l'accouplement mécanique étant possible sans l'utilisation d'un élément d'assemblage intermédiaire intérieur, le moyen d'accouplement mécanique (3) comprenant deux ou davantage d'éléments en plaque plate (3), **caractérisés en ce que** les panneaux (2) sont des panneaux structuraux isolés (2), et dans lequel chaque élément en plaque plate (3) comprend des broches pour embrocher l'élément en plaque plate (3) sur la surface plane principale (4) d'un des panneaux (2), un élément en plaque plate (3) étant agencé pour ponter l'interface (5) sur un côté des surfaces planes principales (4) des premier et deuxième panneaux structuraux isolés (2), et un autre élément en plaque plate (3) étant agencé pour ponter l'interface (5) sur les surfaces planes principales opposées (4) des premier et deuxième panneaux structuraux isolés (2) .

5. Premier panneau structural isolé (2) et deuxième panneau structural isolé (2) selon la revendication 4, dans lesquels les premier et deuxième panneaux structuraux isolés (2) ont deux faces d'extrémité mutuellement opposées (6) accolées ensemble de telle sorte que les deux panneaux structuraux isolés adjacents (2) soient essentiellement en alignement.

6. Premier panneau structural isolé (2) et deuxième panneau structural isolé (2) selon la revendication 4 ou 5, dans lesquels les faces d'extrémité (6) des premier et deuxième panneaux structuraux isolés (2) s'étendent entre les surfaces planes principales opposées (4) de chaque panneau structural isolé (2).

7. Premier panneau structural isolé (2) et deuxième panneau structural isolé (2) selon l'une quelconque des revendications 4 à 6, dans lesquels le moyen d'accouplement mécanique (3) réalise un pontage externe de l'ensemble de l'interface (5) entre les premier et deuxième panneaux structuraux isolés (2), sur les deux surfaces planes principales opposées (4) des panneaux structuraux isolés (2).

8. Premier panneau structural isolé (2) et deuxième panneau structural isolé (2) selon l'une quelconque des revendications 4 à 7, dans lesquels les faces d'extrémité (6) des panneaux structuraux isolés (2) sont dans leur état de fabrication originel sans aucune adaptation aux fins de l'assemblage.

9. Premier panneau structural isolé (2) et deuxième panneau structural isolé (2) selon l'une quelconque des revendications 4 à 8, dans lesquels le moyen d'accouplement mécanique (3) est un élément en plaque (3) s'étendant au travers de l'interface (5) entre les premier et deuxième panneaux structuraux isolés (2).
